# EUROPEAN PATENT APPLICATION

(11) **EP 4 741 181 A1**
(43) Date of publication of application: **13.05.2026**
(21) Application number: 25214191.6
(22) Date of filing: 07.11.2025
(51) Int. Cl.: B60G 11/16, B60G 13/00, B60G 15/06

(54) **VEHICLE SUSPENSION DAMPER PLACEMENT**

(30) Priority: 07.11.2024 GB 202416412
(71) Applicant: McLaren Automotive Limited, Woking, Surrey GU21 4YH (GB)
(72) Inventor: Lo Re, Antonino, Woking, GU21 4YH (GB); Bates, Christopher Lee, Woking, GU21 4YH (GB); Naunton-Evans, Robert John, Woking, GU21 4YH (GB)
(74) Representative: Slingsby Partners LLP

(57) **Abstract**

A vehicle comprising: an occupant cabin; a dashboard extending across the occupant cabin, the dashboard comprising a first aperture; and a first suspension damper located in the first aperture so as to be visible from within the occupant cabin.

## Description

This invention relates to a vehicle comprising a suspension damper located in an aperture in a dashboard.

It is generally the case in a typical road vehicle that the occupants of the vehicle are generally isolated from the operation of the vehicle. This is because the body panels and other components obscure a view of the components that operate to cause the vehicle to function. For example, from a standard vehicle's occupant compartment the driver cannot see the motion of the wheels. This means that the driver, and/or occupants of the vehicle, are limited in the direct feedback they can obtain from the vehicle during operation of the vehicle. The driver, and/or occupants of the vehicle, therefore generally rely on secondary feedback about how the vehicle is operating. For instance, this may be through feeling the resistance when turning the steering wheel or looking out of the windscreen to see whether the vehicle is slipping when turning around a corner. This is particularly important when the vehicle is being driven enthusiastically, for instance when being driven on a track.

It would therefore be desirable for there to be a way of configuring a vehicle to provide increased levels of direct feedback to the occupants when the vehicle is in operation.

According to a first aspect of the present invention there is provided a vehicle comprising: an occupant cabin; a dashboard extending across the occupant cabin, the dashboard comprising a first aperture; and a first suspension damper located in the first aperture so as to be visible from within the occupant cabin.

The vehicle may comprise a first cover; the first cover may be connected around the first aperture to seal the occupant cabin from the first suspension damper. The dashboard may comprise a second aperture; and the vehicle may comprise a second suspension damper located in the second aperture so as to be visible from the occupant cabin. The vehicle may comprise a second cover; the second cover may be connected around the second aperture to seal the occupant cabin from the second suspension damper.

The vehicle may comprise a windscreen, the windscreen may provide a delimitation to the occupant cabin and being positioned so that the first aperture is located within the occupant cabin. The windscreen may be positioned so that the second aperture is located within the occupant cabin. The first and second suspension dampers may be are located on opposite sides of a longitudinal centreline of the vehicle.

The vehicle may comprise: a vehicle body; a first wheel assembly having a rotation axis; a first suspension linkage coupling the first wheel assembly to the vehicle body to permit motion of the rotation axis of the first wheel assembly relative to the vehicle body; wherein the first damper is coupled to the first suspension linkage to constrain the motion of the first wheel assembly by applying a damper force to the first suspension linkage. The vehicle may comprise: a first rocker pivotally coupled to the vehicle body to rotate about a first axis, the first rocker may be coupled to the first suspension linkage so that motion of the first suspension linkage causes rotation of the first rocker about the first axis, and the first rocker may be pivotally coupled to the first damper so that the damper force is applied to the first suspension linkage via the first rocker; and a first push rod, wherein the first rocker may be coupled to the first suspension linkage by the first push rod; wherein the first damper may be attached between the vehicle body and the first rocker.

The vehicle may comprise: a vehicle body; a second wheel assembly having a rotation axis; a second suspension linkage coupling the second wheel assembly to the vehicle body to permit motion of the rotation axis of the second wheel assembly relative to the vehicle body; wherein the second damper may be coupled to the second suspension linkage to constrain the motion of the second wheel assembly by applying a damper force to the second suspension linkage. The vehicle may comprise: a second rocker pivotally coupled to the vehicle body to rotate about a second axis, the second rocker may be coupled to the second suspension linkage so that motion of the second suspension linkage causes rotation of the second rocker about the second axis, and the second rocker may be pivotally coupled to the second damper so that the damper force is applied to the second suspension linkage via the second rocker; and a second push rod, wherein the second rocker may be coupled to the second suspension linkage by the second push rod; wherein the second damper may be attached between the vehicle body and the second rocker.

The first and second wheel assemblies may be front wheel assemblies and may be located on opposite sides of a longitudinal centreline of the vehicle. The first damper may run transversely across the vehicle. The second damper may run transversely across the vehicle. At least a portion of the first suspension damper may protrude through the first aperture. A central portion of the first suspension damper may protrude through the first aperture. At least a portion of the second suspension damper may protrude through the second aperture. A central portion of the second suspension damper may protrude through the second aperture.

The present invention will now be described by way of example with reference to the accompanying drawings. In the drawings:
Figure 1 shows a schematic plan view of a vehicle comprising a suspension system.
Figure 2 shows a schematic view of the suspension system of the vehicle from behind the suspension system.
Figure 3 shows a close-up view of a damper.
Figure 4 shows a schematic plan view of a occupant cabin of the vehicle.
Figure 5 shows a cut though view of the occupant cabin of the vehicle.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to a vehicle comprising an occupant cabin and a dashboard extending across the occupant cabin. The dashboard comprises a first aperture. The vehicle also comprises a first suspension damper located in the first aperture so as to be visible from within the occupant cabin.

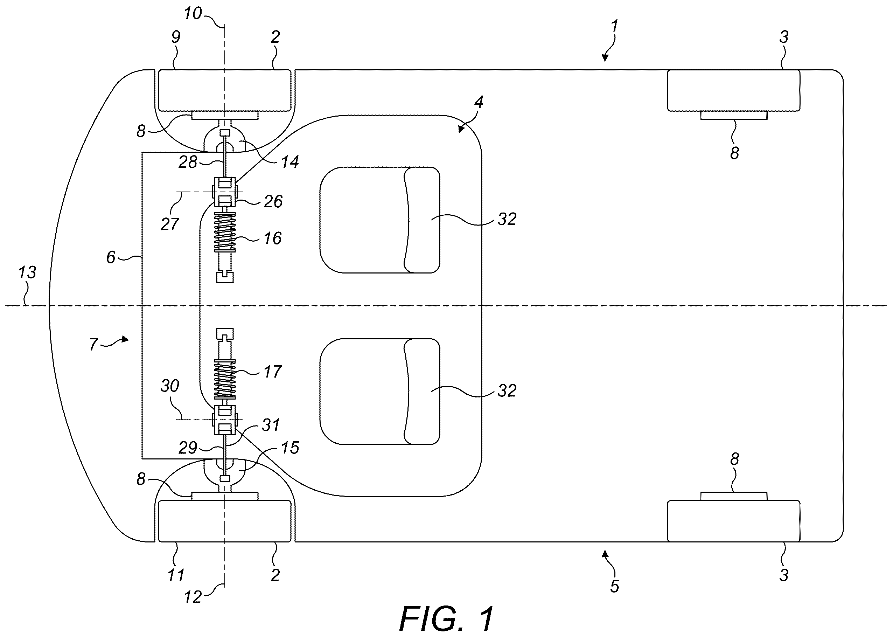

Figure 1 shows a vehicle 1. The vehicle 1 may be an automobile. The vehicle 1 may be a car. The vehicle 1 comprises front wheels 2 and rear wheels 3. The front of the vehicle is defined with reference to the primary motion direction of the vehicle 1. The front of the vehicle 1 points in the primary motion direction of the vehicle 1. Generally, a vehicle has a primary motion directions that is the forward direction. The vehicle 1 comprises an occupant compartment shown generally at 4. The occupant compartment 4 may comprise one or more seats for occupants of the vehicle to sit in. The occupant compartment 4 may accommodate a driver. The occupant compartment may accommodate one or more passengers. The vehicle 1 may comprise controls located within the occupant compartment to enable an occupant to control the motion of the vehicle. The occupant compartment may also be known as a passenger compartment.

The vehicle comprises a vehicle body 5. The vehicle body 5 comprises a plurality of body panels. For example, the body panels may include bonnet panel(s), side door panel(s), and rear deck panel(s). The vehicle body 5 has an outer surface made up of the outer surface of the body panels. The outer surface of the vehicle body 5 defines the exterior surface of the vehicle 1. The vehicle body 5 also comprises a plurality of structural components which support various vehicle components and the body panels. The vehicle body 5 may form the occupant compartment 4. A schematic example of a structural component 6 is shown as part of the vehicle 1. It will be understood that whilst this is shown as a single block it could be formed of multiple components and potentially take the form of some vehicle components such as an engine or electric motor.

The vehicle comprises a suspension system 7 for supporting the vehicle body 5 on the wheels 2. The suspension system 7 shown in figure 1 is located at the front of the vehicle 1. Therefore, the suspension system 7 may be a front suspension system.

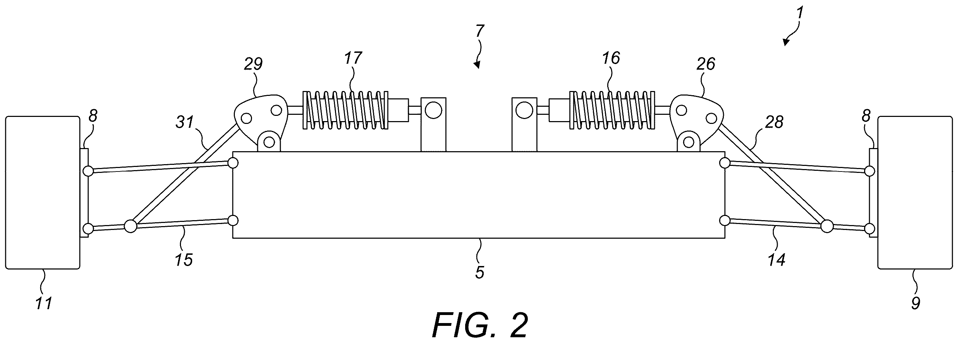

Various components form part of the suspension system 7 as will be described in relation to the vehicle 1 shown in figures 1 and 2. Figure 2 shows a schematic drawing of the vehicle 1. Figure 2 views the suspension system 7 on the vehicle 1 from behind the suspension system 7. I.e. as viewed looking from a position generally located in the occupant compartment 4 of the vehicle 1.

Each wheel 2, 3 is typically mounted on bearings 8. Each wheel 2, 3 can rotate about a rotation axis to permit movement on a motion surface such as a road. This rotation axis may be defined by the respective wheel bearing 8 of the wheel 2, 3. The wheel 2, 3 together with ancillary items such as bearings 8 and, for example, a wheel brake together forms a wheel assembly. Thus, each wheel assembly may have a rotation axis associated with it about which the wheel assembly turns to permit movement on the motion surface.

The vehicle 1 comprises a first wheel assembly 9 having a rotation axis 10. The vehicle 1 comprises a second wheel assembly 11 having a rotation axis 12. As shown in figure 1, the first and second wheel assemblies 9, 11 may be front wheel assemblies. The first and second wheel assemblies 9, 11 are located on opposite sides of a longitudinal centreline 13 of the vehicle 1.

The vehicle 1 comprises a first suspension linkage 14. The vehicle comprises a second suspension linkage 15. Each suspension linkage 14, 15 couples a respective wheel assembly 9, 11 to the vehicle body 5 to permit motion of the rotation axis of that wheel assembly 9, 11 relative to the vehicle body 5. There is therefore one suspension linkage 14, 15 per wheel.

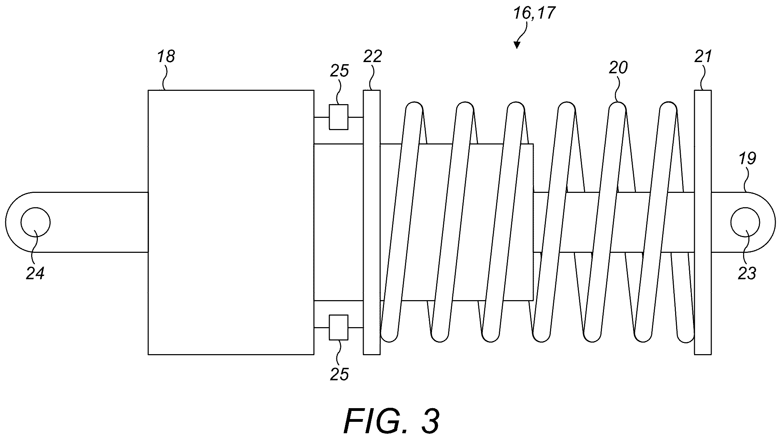

The suspension linkage 14, 15 may be constituted by a single link. It will be appreciated that the suspension linkage 14, 15 may be constituted by a more complicated arrangement of linkages to couple each wheel 2 to the vehicle body 5 as required by the particular motion requirements of the wheels. For instance, suspension linkage 14, 15 may be a wishbone linkage as illustrated in figure 1. The suspension linkage 14, 15 may be a multi-link suspension linkage as shown in figures 2 and 3. The suspension linkage 14, 15 may be a double wishbone linkage.

Each suspension linkage 14, 15 permits motion of the suspension linkage's 14, 15 respective wheel 2 relative to vehicle body 5. Each suspension linkage 14, 15 has a movement range which is the total motion range of the wheel 2 relative to the vehicle body 5. Generally, suspension linkage 14, 15 permits the wheel 2 to move with a generally vertical movement. Other motions of the wheel 2 may also be permitted by suspension linkage 14, 15, for instance the camber of wheel 2 may be permitted to alter and/or the position of the hub/bearing 8 of the wheel may be permitted to move in a lateral direction over the movement range of the suspension linkage 14, 15.

The suspension linkages 14, 15 are pivotally coupled to their respective wheel assembly. The suspension linkages 14, 15 are pivotally coupled to the vehicle body 5.

To control the motion of the wheel 2, relative to the vehicle body 5, over the suspension linkage's 14, 15 motion range, the vehicle comprises at least one damper. The vehicle 1 comprises a first damper 16. The vehicle comprises a second damper 17. Each damper 16, 17 is coupled to a respective suspension linkage to constrain the motion of the associated wheel assembly by applying a damper force to the suspension linkage. The dampers 16, 17 each constrain the motion of the suspension linkage 14, 15 over the motion range. Alternatively, or as well as, the damper 16, 17 may be coupled between elements of the suspension linkage to constrain the motion of the suspension linkage 14, 15.

Figure 3 shows a close-up view of a damper 16, 17 and thus shows it in more detail. The damper 16, 17 comprises a damper body 18. The damper 16, 17 comprises a damper rod 19. The damper rod 19 projects from the damper body 18. The damper rod 19 passes inside the damper body 18. The damper body 18 defines a cylinder inside the damper 16, 17. At least one piston is present inside the cylinder. The damper rod 19 is attached to the piston inside the damper body 18. The damper 16, 17 may be a two-chamber damper. In this case, two pistons are present inside the cylinder and the cylinder is divided into two fluidly independent chambers with a piston in each chamber. Such a two-chamber damper may permit heave response to be controlled separately to roll response. The damper 16, 17 may be a hydraulic damper and the damper force may be controlled by controlling the inflow and outflow of hydraulic fluid from the damper unit.

Each damper 16, 17 comprises a damper spring 20. The damper spring 20 contributes to the damper force that is applied by damper 16, 17. The damper spring 20 runs between a first spring seat 21 attached to the damper rod 19 and a second spring seat 22 attached to the damper body 19. The damper spring 20 can thus apply force to the two spring seats which in turn contributes to the damper force.

The damper 16, 17 may have an adjustable length. This means that the at rest extension of the damper rod 19 relative to the damper body 18 is adjustable. The adjustment may be implemented by changing the amount of fluid present to each side of the one or more pistons present inside the damper. To ensure that the preload on the damper spring 20 remains constant the second spring seat 22 may be adjustable. This permits the length of the damper spring 20 at rest to remain constant. The position of the second spring seat 21 relative to the damper body 18 may be adjustable. The second spring seat 22 may be moveable relative to the damper body 18. Thus, when the length of the damper 16, 17 is reduced the second spring seat 22 may be moved away from the end of the damper rod 19 which extends from the damper body 18 and when the length of the damper 16, 17 is increased the second spring seat may be moved towards the end of the damper rod 19 which extends from the damper body 18. The damper 16, 17 comprises a first attachment point 23 located on the damper rod 19 and a second attachment point 24 located on the damper body 18. The length of the damper may be defined as the distance between the first and second attachment points.

The second spring seat 22 may be moved by an actuator 25. The actuator 25 may take any suitable form such as a linear actuator. The actuator may be powered by any suitable means such as electrically or hydraulically.

The vehicle 1 comprises a first rocker 26. The first rocker 26 is pivotally connected to the vehicle body 5 to rotate about a first axis 27. The first rocker 26 is coupled to the first suspension linkage 14. The first rocker 26 is coupled to the first suspension linkage 14 so that motion of the first suspension linkage 14 causes rotation of the first rocker 26 about the first axis 27. The first rocker 26 is pivotally coupled to the first damper 16. The first rocker 26 is pivotally coupled to the first damper 16 so that the damper force, of the first damper 16, is applied to the first suspension linkage 14 via the first rocker 26. The rotation of the first rocker 26 about the first axis 27 transfers force between the first suspension linkage 14 and the first damper 16. The first rocker 26 permits the first damper 16 to be oriented in a different direction to the motion of the first suspension linkage 14. The first axis 27 may be perpendicular to the direction in which the damper rod 19 of the first damper 16 moves relative to the damper body 18. In other examples, there may be an angular offset from being perpendicular between the first axis 27 and the direction in which the damper rod 19 of the first damper 16 moves relative to the damper body 18. This may be used to work around packaging difficulties within the vehicle 1.

The first damper 16 is attached between the vehicle body 5 and the first rocker 26. One of the first and second attachment points 23, 24 are used to attach the first damper 16 to the vehicle body 5 and the other of the first and second attachment points 23, 24 are used to attach the first damper 16 to the first rocker 26. In figures 1 to 3, the first attachment point 23 is attached to the first rocker 26 and the second attachment point 24 is attached to the vehicle body 5. The attachment between the first damper 16 and the vehicle body 5 is a pivotal connection. The attachment between the first damper 16 and the first rocker 26 is a pivotal connection.

The vehicle 1 comprises a first push rod 28. The first rocker 26 is coupled to the first suspension linkage 14 by the first push rod 28. The first push rod 28 transfers force between the first suspension linkage 14 and the first rocker 26. Thus, when the first suspension linkage 14 moves this motion causes a motion of the first rocker 26 about the first axis 27. The first push rod 28 runs between the first suspension linkage 14 and the first rocker 26. The first push rod 28 is pivotally coupled to the first suspension linkage 14. The first push rod 28 is pivotally coupled to the first rocker 26.

The vehicle 1 comprises a second rocker 29. The second rocker 29 is pivotally coupled to the vehicle body 5 to rotate about a second axis 30. The second rocker 29 is coupled to the second suspension linkage 15. The second rocker 29 is coupled to the second suspension linkage 15 so that motion of the second suspension linkage 15 causes rotation of the second rocker 29 about the second axis 30. The second rocker 29 is pivotally coupled to the second damper 17. The second rocker 29 is pivotally coupled to the second damper 17 so that the damper force, of the second damper 17, is applied to the second suspension linkage 15 via the second rocker 29. The rotation of the second rocker 29 about the second axis 30 transfers force between the second suspension linkage 15 and the second damper 17. The second rocker 29 permits the second damper 17 to be oriented in a different direction to the motion of the second suspension linkage 15. The second axis 30 may be perpendicular to the direction in which the damper rod 19 of the second damper 17 moves relative to the damper body 18. In other examples, there may be an angular offset from being perpendicular between the second axis 30 and the direction in which the damper rod 19 of the first damper 17 moves relative to the damper body 18. This may be used to work around packaging difficulties within the vehicle 1.

The second damper 17 is attached between the vehicle body 5 and the second rocker 29. One of the first and second attachment points 23, 24 are used to attach the second damper 17 to the vehicle body 5 and the other of the first and second attachment points 23, 24 are used to attach the second damper 17 to the second rocker 29. In figures 1 to 3, the first attachment point 23 is attached to the second rocker 29 and the second attachment point 24 is attached to the vehicle body 5. The attachment between the second damper 17 and the vehicle body 5 is a pivotal connection. The attachment between the second damper 17 and the second rocker 29 is a pivotal connection.

The vehicle 1 comprises a second push rod 31. The second rocker 29 is coupled to the second suspension linkage 15 by the second push rod 31. The second push rod 31 transfers force between the second suspension linkage 15 and the second rocker 29. Thus, when the second suspension linkage 15 moves this motion causes a motion of the second rocker 29 about the second axis 30. The second push rod 31 runs between the second suspension linkage 15 and the second rocker 29. The second push rod 31 is pivotally coupled to the second suspension linkage 15. The second push rod 31 is pivotally coupled to the second rocker 29.

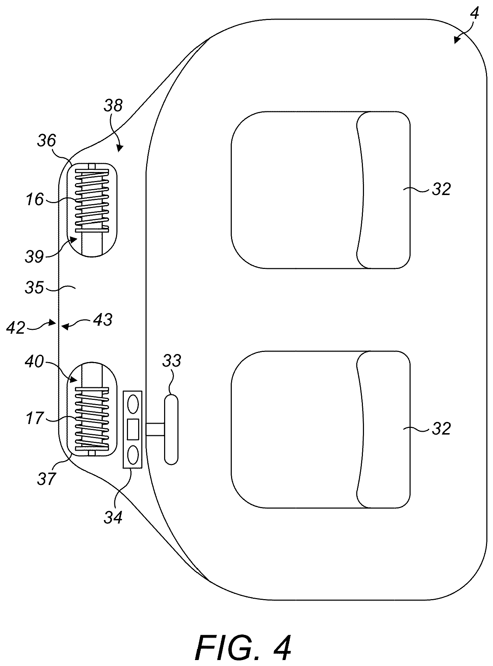

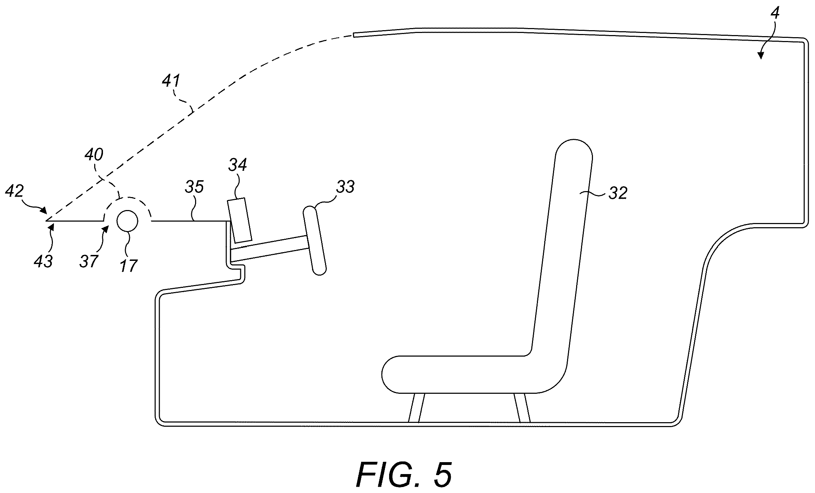

Figures 4 and 5 show schematic views of the occupant compartment 4. Some components of the vehicle 1 have been removed for clarity from these figures but it will be understood that they may be present as discussed with reference to the other figures. The occupant compartment 4 comprises at least one occupant seat 32. In this way, the vehicle 1 may comprise at least one occupant seat 32. The vehicle 1 may comprise two occupant seats 32 as shown in figure 1 and 4. The vehicle 1 may comprise more than two occupant seats 32, for instance four or five occupant seats. One of the occupant seats 32 may be a driver seat. The driver seat may have driving controls in front of it. For instance, the vehicle 1 may comprise a steering wheel 33 and other driving controls (not shown). These driving controls enable the driver to pilot the vehicle 1. The vehicle 1 may also comprise one or more instruments clusters and/or screens 34. These instrument clusters and/or instrument screens permit information to be displayed to the driver.

The vehicle 1 comprises a dashboard 35. The dashboard 35 extends across the occupant cabin 4. The dashboard 35 in a generally transverse direction across the occupant cabin 4. The dashboard 35 may run across part of the occupant cabin 4. The dashboard 35 may run across at least part of the occupant cabin 4. The dashboard 35 may run from one side of the vehicle to the other within the occupant cabin 4. The dashboard 35 may be formed of one panel or multiple panels which together provide the extent of the dashboard 35.

The dashboard 35 comprises at least one aperture 36, 37. The aperture(s) 36, 37 are through holes in the dashboard 35. The dashboard 35 comprises a first aperture 36. The dashboard 35 comprises a second aperture 37. Whilst it is shown in figure 4 that the dashboard 35 comprises first and second apertures 36, 37 it will be appreciated that the dashboard 35 may comprise only the first aperture 36.

The first aperture 36 is located within the occupant cabin 4. The second aperture 37 is located within the occupant cabin 4.

The aperture(s) 36, 37 are located so that the suspension damper(s) 16, 17 are visible through a respective aperture. The first damper 16 is located in the first aperture 36. The first damper 16 is located in the first aperture 36 so as to be visible from within the occupant cabin 4. The second damper 17 is located in the second aperture 37. The second damper 17 is located in the second aperture 37 so as to be visible from within the occupant cabin 4. The damper(s) 16, 17 are visible from the occupant cabin 4 in that an occupant sitting in one of the occupant seats 32 can view at least part of the damper through the aperture. The damper(s) 16, 17 project through the respective aperture 36, 37 so that at least part of the damper 16, 17 is at a level higher than the dashboard 35 in the region of the aperture. The dashboard 35 comprises a top surface 38. The damper(s) 16, 17 project through the respective aperture 36, 37 so that at least part of the damper(s) 16, 17 is at a level higher than the top surface 38 of the dashboard 35.

The vehicle 1 may comprise a first cover 39. The first cover 39 is connected around the first aperture 36. The first cover 39 seals the occupant cabin 4 from the first suspension damper 36. The first cover 39 seals the occupant cabin 4 from the region that the first suspension damper 16 runs through. The first cover 39 has a level of translucency which permits the first suspension damper 16 to be viewed through the first cover 39. The first cover 39 may be translucent. The first cover 39 may be transparent. The first cover 39 may be clear or coloured.

The vehicle 1 may comprise a second cover 40. The second cover 40 is connected around the first aperture 37. The second cover 40 seals the occupant cabin 4 from the second suspension damper 17. The second cover 40 seals the occupant cabin 4 from the region that the second suspension damper 17 runs through. The second cover 40 has a level of translucency which permits the second suspension damper 17 to be viewed through the second cover 40. The second cover 40 may be translucent. The second cover 40 may be transparent. The second cover 40 may be clear or coloured.

The cover(s) 39, 40 may protrude away from the dashboard 35. The cover(s) 39, 40 may project away from the dashboard 35. The cover(s) 39, 40 may by shaped so as to extend upwards from the dashboard 35. The cover(s) 39, 40 may have a curved cross-section. The cover(s) 39, 40 may have rounded ends. The cover(s) 39, 40 may have rounded ends at the transverse ends of the cover(s) 39, 40. The cover(s) 39, 40 may be shaped to accommodate the portion of the suspension damper(s) which project through the aperture(s) 36, 37.

The cover(s) 39, 40 have an edge which runs around the edge of the respective aperture 36. 37. The cover(s) 39, 40 may be attached to the edge of the respective aperture 36, 37. The cover(s) 39, 40 may be attached to the dashboard 35 close to the edge of the respective aperture 36. 37.

The covers are shown more fully in figure 5. Here the second cover 40 is shown but it will be appreciated that the first cover 39 will be configured similarly on the other side of the vehicle 1.

The vehicle 1 comprises a windscreen 41. The windscreen 41 is a front windscreen 41. The occupant compartment 4 is partially delimited by the windscreen 41. In this way, the windscreen 41 provides a delimitation to the occupant cabin 4. The windscreen 41 is located so that the first aperture 36 is located within the occupant cabin 4. The windscreen 41 is located so that the second aperture 37 is located within the occupant cabin 4.

The windscreen 41 has a first edge 42 which may run a long a first edge 43 of the dashboard 35. The first edge 42 of the windscreen 41 may be in contact with the first edge 43 of the dashboard 35. The windscreen 41 may seal against the first edge of the dashboard 35.

At least a portion of the first suspension damper 16 may protrude through the first aperture 36. A central portion of the first suspension damper 16 may protrude through the first aperture 36. A part of the first suspension damper 16 which is visible in the aperture 36 may be a moveable part of the first suspension damper 16. The moveable part of the first suspension damper 16 may be a part that moves during motion of the vehicle 1.

At least a portion of the second suspension damper 17 may protrude through the second aperture 37. A central portion of the second suspension damper 17 may protrude through the first aperture 37. A part of the first suspension damper 17 which is visible in the aperture 37 may be a moveable part of the second suspension damper 17. The moveable part of the second suspension damper 17 may be a part that moves during motion of the vehicle 1.

The damper(s) 16, 17 being exposed inside the occupant cabin 4 permits the occupants to see the operation of the damper(s) 16, 17. In addition to this providing a striking visual feature, the visible operation of the damper(s) 16, 17 provides feedback to the occupant(s), and in particular the driver, about the current operation of the vehicle 1. This provides the driver with additional information about the operation of the vehicle 1 which can assist the driver when operating the vehicle 1. This is especially true when the vehicle 1 is being driven enthusiastically, such as on a track, as the operation of the dampers 16, 17 provides immediate visual feedback to the driver about the operation of the suspension and the motion of the wheels.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

### ANNEX TO THE DESCRIPTION

1. A vehicle comprising:
   an occupant cabin;
   a dashboard extending across the occupant cabin, the dashboard comprising a first aperture; and
   a first suspension damper located in the first aperture so as to be visible from within the occupant cabin.
2. A vehicle according to 1, the vehicle comprising a first cover; the first cover being connected around the first aperture to seal the occupant cabin from the first suspension damper.
3. A vehicle according to 1 or 2, wherein the dashboard comprises a second aperture; and the vehicle comprises a second suspension damper located in the second aperture so as to be visible from the occupant cabin.
4. A vehicle according to 3, the vehicle comprising a second cover; the second cover being connected around the second aperture to seal the occupant cabin from the second suspension damper.
5. A vehicle according to any of 1 to 4, the vehicle comprising a windscreen, the windscreen providing a delimitation to the occupant cabin and being positioned so that the first aperture is located within the occupant cabin.
6. A vehicle according to 5 as dependent on 3, the windscreen being positioned so that the second aperture is located within the occupant cabin.
7. A vehicle according to any of 1 to 6 as dependent on 3, wherein the first and second suspension dampers are located on opposite sides of a longitudinal centreline of the vehicle.
8. A vehicle according to any of 1 to 7, the vehicle comprising:
   a vehicle body;
   a first wheel assembly having a rotation axis;
   a first suspension linkage coupling the first wheel assembly to the vehicle body to permit motion of the rotation axis of the first wheel assembly relative to the vehicle body;
   wherein the first damper is coupled to the first suspension linkage to constrain the motion of the first wheel assembly by applying a damper force to the first suspension linkage.
9. A vehicle according to 8, the vehicle comprising:
   a first rocker pivotally coupled to the vehicle body to rotate about a first axis, the first rocker is coupled to the first suspension linkage so that motion of the first suspension linkage causes rotation of the first rocker about the first axis, and the first rocker is pivotally coupled to the first damper so that the damper force is applied to the first suspension linkage via the first rocker; and
   a first push rod, wherein the first rocker is coupled to the first suspension linkage by the first push rod;
   wherein the first damper is attached between the vehicle body and the first rocker.
10. A vehicle according to any of 1 to 9 as dependent on 3, the vehicle comprising:
   a vehicle body;
   a second wheel assembly having a rotation axis;
   a second suspension linkage coupling the second wheel assembly to the vehicle body to permit motion of the rotation axis of the second wheel assembly relative to the vehicle body;
   wherein the second damper is coupled to the second suspension linkage to constrain the motion of the second wheel assembly by applying a damper force to the second suspension linkage.
11. A vehicle according to 10, the vehicle comprising:
   a second rocker pivotally coupled to the vehicle body to rotate about a second axis, the second rocker is coupled to the second suspension linkage so that motion of the second suspension linkage causes rotation of the second rocker about the second axis, and the second rocker is pivotally coupled to the second damper so that the damper force is applied to the second suspension linkage via the second rocker; and
   a second push rod, wherein the second rocker is coupled to the second suspension linkage by the second push rod;
   wherein the second damper is attached between the vehicle body and the second rocker.
12. A vehicle according to any of 1 to 11 as dependent on 8 and 10, wherein the first and second wheel assemblies are front wheel assemblies and are located on opposite sides of a longitudinal centreline of the vehicle.
13. A vehicle according to any of 1 to 12, wherein the first damper runs transversely across the vehicle.
14. A vehicle according to any of 1 to 13 as dependent on 3, wherein the second damper runs transversely across the vehicle.
15. A vehicle according to any of 1 to 14, wherein at least a portion of the first suspension damper protrudes through the first aperture.
16. A vehicle according to 15, wherein a central portion of the first suspension damper protrudes through the first aperture.
17. A vehicle according to any of 1 to 16 as dependent on 3, wherein at least a portion of the second suspension damper protrudes through the second aperture.
18. A vehicle according to 17, wherein a central portion of the second suspension damper protrudes through the second aperture.

## Claims

1. A vehicle comprising:
an occupant cabin;
a dashboard extending across the occupant cabin, the dashboard comprising a first aperture; and
a first suspension damper located in the first aperture so as to be visible from within the occupant cabin.

2. A vehicle according to claim 1, the vehicle comprising a first cover; the first cover being connected around the first aperture to seal the occupant cabin from the first suspension damper.

3. A vehicle according to claim 1 or 2, wherein the dashboard comprises a second aperture; and the vehicle comprises a second suspension damper located in the second aperture so as to be visible from the occupant cabin.

4. A vehicle according to claim 3, the vehicle comprising a second cover; the second cover being connected around the second aperture to seal the occupant cabin from the second suspension damper.

5. A vehicle according to any preceding claim, the vehicle comprising a windscreen, the windscreen providing a delimitation to the occupant cabin and being positioned so that the first aperture is located within the occupant cabin.

6. A vehicle according to claim 5 as dependent on claim 3, the windscreen being positioned so that the second aperture is located within the occupant cabin.

7. A vehicle according to any preceding claim as dependent on claim 3, wherein the first and second suspension dampers are located on opposite sides of a longitudinal centreline of the vehicle.

8. A vehicle according to any preceding claim, the vehicle comprising:
a vehicle body;
a first wheel assembly having a rotation axis;
a first suspension linkage coupling the first wheel assembly to the vehicle body to permit motion of the rotation axis of the first wheel assembly relative to the vehicle body;
wherein the first damper is coupled to the first suspension linkage to constrain the motion of the first wheel assembly by applying a damper force to the first suspension linkage.

9. A vehicle according to claim 8, the vehicle comprising:
a first rocker pivotally coupled to the vehicle body to rotate about a first axis, the first rocker is coupled to the first suspension linkage so that motion of the first suspension linkage causes rotation of the first rocker about the first axis, and the first rocker is pivotally coupled to the first damper so that the damper force is applied to the first suspension linkage via the first rocker; and
a first push rod, wherein the first rocker is coupled to the first suspension linkage by the first push rod;
wherein the first damper is attached between the vehicle body and the first rocker.

10. A vehicle according to any preceding claim as dependent on claim 3, the vehicle comprising:
a vehicle body;
a second wheel assembly having a rotation axis;
a second suspension linkage coupling the second wheel assembly to the vehicle body to permit motion of the rotation axis of the second wheel assembly relative to the vehicle body;
wherein the second damper is coupled to the second suspension linkage to constrain the motion of the second wheel assembly by applying a damper force to the second suspension linkage.

11. A vehicle according to claim 10, the vehicle comprising:
a second rocker pivotally coupled to the vehicle body to rotate about a second axis, the second rocker is coupled to the second suspension linkage so that motion of the second suspension linkage causes rotation of the second rocker about the second axis, and the second rocker is pivotally coupled to the second damper so that the damper force is applied to the second suspension linkage via the second rocker; and
a second push rod, wherein the second rocker is coupled to the second suspension linkage by the second push rod;
wherein the second damper is attached between the vehicle body and the second rocker.

12. A vehicle according to any preceding claim as dependent on claims 8 and 10, wherein the first and second wheel assemblies are front wheel assemblies and are located on opposite sides of a longitudinal centreline of the vehicle.

13. A vehicle according to any preceding claim as dependent on claim 3, wherein the first damper runs transversely across the vehicle and the second damper runs transversely across the vehicle.

14. A vehicle according to any preceding claim, wherein at least a portion of the first suspension damper protrudes through the first aperture; and optionally a central portion of the first suspension damper protrudes through the first aperture.

15. A vehicle according to any preceding claim as dependent on claim 3, wherein at least a portion of the second suspension damper protrudes through the second aperture; and optionally a central portion of the second suspension damper protrudes through the second aperture.
